# FASCICULE DE BREVET EUROPEEN

(11) **EP 3 390 556 B1**
(45) Date de publication et mention de la délivrance du brevet: **19.02.2020**
(21) Numéro de dépôt: 16826107.1
(22) Date de dépôt: 15.12.2016
(51) Int. Cl.: C09J 7/00

(54) **PROCÉDÉ DE PROTECTION D'UN DOCUMENT, DISPOSITIF DE PROTECTION COMPRENANT UNE COUCHE ADHÉSIVE ET DOCUMENT**
VERFAHREN ZUM SCHUTZ EINES DOKUMENTS, SCHUTZVORRICHTUNG MIT EINER KLEBESCHICHT UND DOKUMENT
PROCESS FOR PROTECTING A DOCUMENT, PROTECTIVE DEVICE COMPRISING AN ADHESIVE LAYER AND DOCUMENT

(30) Priorité: 16.12.2015 FR 1562539
(43) Date de publication de la demande: 24.10.2018
(73) Titulaire: FASVER, 34670 Baillargues (FR)
(72) Inventeur: PHILIPPE, Eric, 13430 Eyguieres (FR); BES, Laurence, 34830 Jacou (FR)
(74) Mandataire: HGF Limited
(86) Numéro de dépôt international: PCT/FR2016/053474
(87) Numéro de publication internationale: WO 2017/103506

(56) Documents cités:
- EP-A1- 1 518 708
- FR-A1- 3 005 436

## Description

L'invention concerne un procédé de protection d'un document, notamment d'un document officiel.

L'invention concerne également un dispositif de protection comprenant une couche adhésive et un document, notamment un document officiel comprenant au moins un tel dispositif de protection.

Les documents officiels sont des documents qui, en raison de leur nature et/ou des droits qu'ils peuvent conférer, doivent être protégés contre les tentatives de falsification et/ou les contrefaçons et/ou pour garantir une authentification et/ou pour garantir leur intégrité (c'est-à-dire le fait qu'elles n'ont pas été altérées ou modifiées). Il peut s'agir notamment de passeports, visas, cartes d'identité, permis de conduire, cartes grises, cartes de fidélité, cartes bancaires, chèques bancaires, diplômes, certificats, titres de transport, cartes de contrôle d'accès, badges, étiquettes, actes légaux, contrats, registres légaux, plans cadastraux, documents fiduciaires, billets de banque, plans de fabrication ou autres plans... Les documents officiels portent des inscriptions, telles que des mentions variables de personnalisation (nom, prénom, adresse, photo, signature... d'un titulaire ou des parties...) et/ou des mentions communes (motifs sécuritaires, matrices, cadres, noms de champs, sceaux, hologrammes, signatures, valeurs,...).

Dans tout le texte, on désigne par "inscription" tout signe ou motif réalisé sur une couche d'un document, pouvant être lu par l'homme et/ou par machine (OCR), au moins sous certaines conditions (notamment sous éclairage normal en lumière visible ; et/ou sous éclairage spécifique ; et/ou après activation d'un dispositif électronique (écran) ou autre...). Il peut s'agir notamment de mentions variables de personnalisation (nom, état civil, photographie, valeur, dates...) d'un document officiel ou de mentions communes et/ou de sécurité ; de textes (écriture manuelle ou caractères imprimés) ; de codes (ASCII, codes universels à lecture optoélectronique tels que codes à barres, codes QR...) ; de dessins, d'images ou photographies ; de tâches ou aplats... Les documents officiels contiennent en général des inscriptions, dites inscriptions de sécurité, pour empêcher ou rendre très complexes leur reproduction ou leur falsification. Ces inscriptions de sécurité peuvent être du type visibles dans le domaine visible par simple observation à l'œil nu (sécurité de premier niveau) ; ou du type pouvant être contrôlées à l'aide d'un dispositif spécifique tel qu'une lampe à rayonnement ultraviolet (sécurité de deuxième niveau) ; ou du type pouvant être contrôlées uniquement dans un laboratoire certifié (sécurité de troisième niveau).

Dans tout le texte, l'expression "au moins sensiblement" indique, de façon habituelle, qu'une caractéristique, structurelle ou fonctionnelle, ne doit pas être prise comme marquant une discontinuité abrupte, qui n'aurait pas de sens physique, mais couvre non seulement cette structure ou cette fonction, mais également des variations légères de cette structure ou de cette fonction qui produisent, dans le contexte technique considéré, un effet de même nature, sinon de même degré.

De nombreux documents officiels tels que les cartes bancaires, cartes d'identité, permis de conduire, cartes d'accès individuel à des sites ou des transports en commun, feuilles de passeport, fiches douanières, visas, documents fiduciaires, billets de banque... sont formés de plusieurs couches assemblées entre elles par exemple à l'aide d'un adhésif.

Toutefois, la présence d'une telle couche adhésive constitue un point faible desdits documents officiels face aux différentes méthodes de falsification, et ce, malgré la présence d'éléments de sécurité particuliers dans les couches formant le document. En effet, la plupart des adhésifs utilisés et compatibles avec de tels documents sont souvent des matériaux thermoplastiques, présentant une température au-delà de laquelle ils ramollissent. Les propriétés adhérentes de tels adhésifs thermoplastiques augmentent avec l'augmentation de la température, ce qui permet le collage. La séparation des couches assemblées par de tels adhésifs peut donc être réalisée au moins par un chauffage au-dessus d'une température prédéterminée. En outre, il est également possible de séparer les différentes couches formant le document par solubilisation de la couche adhésive et/ou des couches adjacentes dans des solvants ou encore par ponçage mécanique des couches adjacentes.

DE 10 2011 112 951 décrit par exemple un document de sécurité et une laque de thermo-scellage à chaud dans lequel un adhésif encapsulé est utilisé. Or, il s'avère que l'utilisation d'une telle composition de thermo-scellage à chaud ne permet pas d'obtenir des résultats satisfaisants en terme de fabrication (nécessité de choisir un adhésif particulier, nécessité d'un chauffage à une température prédéterminée, ...), ni en terme d'antifalsification, la falsification et le décollement des différentes couches assemblées par chauffage restant possibles.

L'invention vise donc à pallier ces inconvénients en proposant un procédé de protection d'un document, un dispositif de protection et un document permettant de protéger des inscriptions variables portées par ledit document.

L'invention vise également à proposer un procédé de protection d'un document et un dispositif de protection permettant de protéger ledit document contre les falsifications et/ou pour son authentification et/ou pour garantir son intégrité.

L'invention vise plus particulièrement à permettre la réalisation d'un dispositif de protection pouvant être collé, et notamment transféré, de façon irréversible sur un document, notamment un document officiel, ledit dispositif de protection présentant un fort pouvoir adhérent.

L'invention vise également à proposer un procédé de protection d'un document et un dispositif de protection permettant de protéger un document sans lui impartir une rigidité qui ne serait pas souhaitée et/ou qui serait supérieure ou nettement supérieure à sa rigidité initiale.

L'invention vise également à proposer un procédé de protection d'un document et un dispositif de protection permettant de protéger un document contre la plupart des procédés de falsification de documents officiels connus (notamment mise en contact avec une plaque chaude, trempage dans l'eau chaude, trempage dans des solvants tels que l'acétone ou encore le White Spirit®...).

Pour ce faire, l'invention concerne un procédé de protection d'un document dans lequel :
- on colle un film transparent sur une face dudit document en vue de protéger des inscriptions variables dudit document, par l'intermédiaire d'au moins une couche adhésive comprenant au moins un polymère thermoplastique,
caractérisé en ce que :
- on choisit ledit polymère thermoplastique dans le groupe formé des polymères thermoplastiques présentant un indice d'hydroxyle mesuré selon la norme DIN 53 240/2 compris entre 3 mg de KOH/g et 60 mg de KOH/g (dudit polymère thermoplastique), des polymères thermoplastiques présentant un indice d'acide mesuré selon la norme DIN EN ISO 2114 compris entre 2 mg de KOH/g et 150 mg de KOH/g (dudit polymère thermoplastique), de leurs copolymères et de leurs mélanges,
- ledit polymère thermoplastique présente une température de transition vitreuse, mesurée par calorimétrie différentielle à balayage, comprise entre 40°C et 110°C,
- ladite couche adhésive comprend en outre au moins un agent réticulant, chaque agent réticulant :
   - étant choisi dans le groupe des composés aliphatiques comprenant entre 4 et 50 atomes de carbone,
   - présentant en moyenne au moins 2,8 fonctions, choisies dans le groupe formé des isocyanates, des carbodiimides, des azyridines et des alcoxysilanes, par molécule d'agent réticulant,
- lors du collage dudit film transparent sur ledit document, on réalise une réticulation dudit polymère thermoplastique et dudit agent réticulant, c'est-à-dire une réticulation de la couche adhésive, la réaction de réticulation s'effectuant entre ledit polymère thermoplastique et ledit agent réticulant.

L'invention concerne également un dispositif de protection pour un document présentant des inscriptions variables à protéger, ledit dispositif de protection comprenant :
- au moins un film transparent portant au moins une couche adhésive comprenant au moins un polymère thermoplastique,
caractérisé en ce que :
- ledit polymère thermoplastique est choisi dans le groupe formé des polymères thermoplastiques présentant un indice d'hydroxyle mesuré selon la norme DIN 53 240/2 compris entre 3 mg de KOH/g et 60 mg de KOH/g (dudit polymère thermoplastique), des polymères thermoplastiques présentant un indice d'acide mesuré selon la norme DIN EN ISO 2114 compris entre 2 mg de KOH/g et 150 mg de KOH /g (dudit polymère thermoplastique), de leurs copolymères et de leurs mélanges,
- ledit polymère thermoplastique présente une température de transition vitreuse, mesurée par calorimétrie différentielle à balayage, comprise entre 40°C et 110°C, et en particulier comprise entre 50°C et 85°C,
et en ce que :
- ladite couche adhésive comprend en outre au moins un agent réticulant, chaque agent réticulant :
   - étant choisi dans le groupe des composés aliphatiques comprenant entre 4 et 50 atomes de carbone,
   - présentant en moyenne au moins 2,8 fonctions, choisies dans le groupe formé des isocyanates, des carbodiimides, des azyridines et des alcoxysilanes, par molécule d'agent réticulant.

L'invention concerne également un tel dispositif de protection pour la mise en œuvre d'un procédé de protection d'un document selon l'invention.

L'invention concerne encore un document comprenant une feuille de base, des inscriptions variables associées à ladite feuille de base et au moins un dispositif de protection selon l'invention.

Les inventeurs ont constaté que le choix d'une couche adhésive comprenant un tel polymère thermoplastique et un tel agent réticulant permet, après leur réticulation ensemble, lors du collage dudit film transparent sur un document d'obtenir un collage très fort et un document protégé efficacement contre tout type de falsification. Un procédé et un dispositif de protection selon l'invention permettent donc de garantir l'authenticité et l'intégrité d'un document en protégeant les couches disposées sous ledit film transparent, tout en conservant la souplesse et la transparence initiales du document, la couche adhésive n'affectant pas cette transparence (au moins dans le domaine visible).

Ceci est tout à fait surprenant et va à l'encontre des propriétés des adhésifs connus. En effet, pour pallier les problèmes de falsification liés à l'emploi d'adhésifs thermoplastiques, on aurait pu penser qu'il suffisait d'utiliser des adhésifs thermodurcissables classiques. Or, les inventeurs ont constaté que l'utilisation d'adhésifs thermodurcissables connus était très insatisfaisante et se traduisait par une fragilisation du document à protéger et une résistance à la délamination trop faible. En outre, les adhésifs thermodurcissables ne permettent pas de conserver la transparence d'un document. De façon tout à fait surprenante, les inventeurs ont constaté que, par réticulation d'un adhésif comprenant au moins un tel polymère thermoplastique et au moins un tel agent réticulant, il est possible de préparer un dispositif de protection et un document avec lesquels on obtient des résultats exceptionnels en termes de collage, notamment en ce qui concerne la résistance à la délamination du film transparent et du document.

L'invention concerne également un procédé de protection d'un document dans lequel on colle un dispositif de protection sur une face dudit document en vue de protéger des inscriptions variables dudit document, dans lequel :
- on dispose sur ledit document au moins un dispositif de protection comprenant au moins une couche adhésive comprenant au moins un polymère thermoplastique, ladite couche adhésive s'étendant au contact d'une couche extrême d'un film transparent,
caractérisé en ce que :
- on choisit ledit polymère thermoplastique dans le groupe formé des polymères thermoplastiques présentant un indice d'hydroxyle mesuré selon la norme DIN 53 240/2 compris entre 3 mg de KOH/g et 60 mg de KOH/g, des polymères thermoplastiques présentant un indice d'acide mesuré selon la norme DIN EN ISO 2114 compris entre 2 mg de KOH/g et 150 mg de KOH/g, de leurs copolymères et de leurs mélanges,
- ledit polymère thermoplastique présente une température de transition vitreuse, mesurée par calorimétrie différentielle à balayage, comprise entre 40°C et 110°C, et en particulier comprise entre 50°C et 85°C,
- ladite couche adhésive comprend en outre au moins un agent réticulant, chaque agent réticulant :
   - étant choisi dans le groupe des composés aliphatiques comprenant entre 4 et 50 atomes de carbone, et en particulier entre 4 et 46 atomes de carbone,
   - présentant en moyenne au moins 2,8 fonctions, choisies dans le groupe formé des isocyanates, des carbodiimides, des azyridines et des alcoxysilanes, par molécule d'agent réticulant,
- lors du collage dudit dispositif de protection sur ledit document, on réalise une réticulation dudit polymère thermoplastique et dudit agent réticulant.

L'invention concerne également un dispositif de protection pour un document présentant des inscriptions variables à protéger, ledit dispositif de protection comprenant :
- au moins une couche adhésive comprenant au moins un polymère thermoplastique, ladite couche adhésive s'étendant au contact d'une couche extrême d'un film transparent,
caractérisé en ce que :
- ledit polymère thermoplastique est choisi dans le groupe formé des polymères thermoplastiques présentant un indice d'hydroxyle mesuré selon la norme DIN 53 240/2 compris entre 3 mg de KOH/g et 60 mg de KOH/g, des polymères thermoplastiques présentant un indice d'acide mesuré selon la norme DIN EN ISO 2114 compris entre 2 mg de KOH/g et 150 mg de KOH /g, de leurs copolymères et de leurs mélanges,
- ledit polymère thermoplastique présente une température de transition vitreuse, mesurée par calorimétrie différentielle à balayage, comprise entre 40°C et 110°C, et en particulier comprise entre 50°C et 85°C,
et en ce que :
- ladite couche adhésive comprend en outre au moins un agent réticulant, chaque agent réticulant :
   - étant choisi dans le groupe des composés aliphatiques comprenant entre 4 et 50 atomes de carbone,
   - présentant en moyenne au moins 2,8 fonctions, choisies dans le groupe formé des isocyanates, des carbodiimides, des azyridines et des alcoxysilanes, par molécule d'agent réticulant.

L'invention concerne encore un document comprenant :
- une feuille de base,
- des inscriptions variables associées à ladite feuille de base,
- au moins une couche adhésive comprenant au moins un polymère thermoplastique, ladite couche adhésive s'étendant au contact d'une couche extrême de ladite feuille de base,
caractérisé en ce que :
- ledit polymère thermoplastique est choisi dans le groupe formé des polymères thermoplastiques présentant un indice d'hydroxyle mesuré selon la norme DIN 53 240/2 compris entre 3 mg de KOH/g et 60 mg de KOH/g, des polymères thermoplastiques présentant un indice d'acide mesuré selon la norme DIN EN ISO 2114 compris entre 2 mg de KOH/g et 150 mg de KOH/g, de leurs copolymères et de leurs mélanges,
- ledit polymère thermoplastique présente une température de transition vitreuse, mesurée par calorimétrie différentielle à balayage, comprise entre 40°C et 110°C,
et en ce que :
- ladite couche adhésive comprend en outre au moins un agent réticulant, chaque agent réticulant :
   - étant choisi dans le groupe des composés aliphatiques comprenant entre 4 et 50 atomes de carbone,
   - présentant en moyenne au moins 2,8 fonctions, choisies dans le groupe formé des isocyanates, des carbodiimides, des azyridines et des alcoxysilanes, par molécule d'agent réticulant.

L'invention concerne en particulier un document obtenu par un procédé de protection d'un document selon l'invention.

Toute technique d'impression peut être utilisée pour imprimer ladite couche adhésive sur le film transparent et/ou le document, notamment choisie parmi la sérigraphie, l'héliogravure, la flexographie, l'impression offset, ou autre.

Une fois que la couche adhésive a été appliquée sur le film transparent, la couche adhésive est adaptée pour permettre le collage du dispositif de protection sur un document immédiatement après la préparation du dispositif de protection (notamment après l'application de la couche adhésive sur le film transparent) ou ultérieurement, notamment plusieurs jours à plusieurs mois après le dépôt de la couche adhésive sur le film transparent. Ceci permet de disposer d'un dispositif de protection susceptible d'être collé de façon irréversible sur un document tout en pouvant choisir le moment où l'on souhaite réaliser ce collage. En particulier, l'opérateur réalisant le collage du dispositif de protection sur un document n'a pas besoin de disposer de dispositifs de mélange entre au moins deux composants, ni d'appliquer lui-même, en particulier sous forme liquide, une colle mais peut déclencher ou activer le collage lui-même au moment voulu, par exemple par passage sous un rouleau de lamination chauffant.

Une fois la couche adhésive disposée au contact d'un document à protéger, la réaction de réticulation de la couche adhésive peut être activée de différentes façons.

Dans un mode de réalisation avantageux d'un procédé selon l'invention, on active ladite réaction de réticulation de ladite couche adhésive en soumettant ladite couche adhésive à une température adaptée pour permettre la réticulation de ladite couche adhésive par réaction de l'agent réticulant notamment avec les groupements OH et/ou les groupements acides du polymère thermoplastique. Avantageusement et selon l'invention, on réalise ladite réticulation de ladite couche adhésive à une température comprise entre 60°C et 220°C, et en particulier entre 80°C et 200°C.

Dans un mode de réalisation avantageux d'un procédé selon l'invention, on réalise au moins une étape de lamination à chaud et sous pression dudit document, notamment du document revêtu dudit film transparent, et en particulier du document revêtu dudit dispositif de protection. Cette lamination à chaud peut être réalisée à une température comprise entre 60°C et 220°C, et en particulier entre 80°C et 200°C, la réticulation pouvant notamment avoir lieu au cours de cette étape de lamination.

Avantageusement et selon l'invention, ledit film transparent comprend une pluralité de couches superposées. Avantageusement et selon l'invention, ledit film transparent est formé de couches en au moins un matériau choisi dans le groupe des matériaux thermoplastiques. En particulier, un film transparent utilisé dans un procédé et un dispositif de protection selon l'invention peut avantageusement être formé par lamination à chaud et sous pression d'une pluralité de couches en un matériau thermoplastique choisi parmi les polycarbonates, le PVC, leurs mélanges et leurs associations.

Avantageusement et selon l'invention, ledit film transparent comprend au moins une couche, notamment au moins une couche extrême thermoplastique.

Le dispositif de protection, et en particulier le film transparent utilisé, peut comprendre des inscriptions de sécurité telles que des inscriptions préparées à l'aide de pigments photoluminescents (choisis parmi les pigments fluorescents et les pigments phosphorescents), des inscriptions préparées à l'aide de pigments iridescents, des inscriptions métallisées réfléchissantes ou encore des marquages réalisés par gravure et/ou marquage au laser.

Dans certains modes de réalisation, avantageusement et selon l'invention, ledit dispositif de protection, en particulier le film transparent et ladite couche adhésive, sont transparents aux longueurs d'ondes non seulement du domaine visible mais également dans le domaine des ultraviolets (ultraviolets longs et/ou ultraviolets courts) et/ou des infrarouges. En particulier, avantageusement et selon l'invention, ledit film transparent ne présente pas de fluorescence lorsqu'il est exposé à des longueurs d'ondes dans le domaine des ultraviolets, notamment à des longueurs d'ondes sensiblement égales à 354nm. En particulier, une fois collé sur un document, le dispositif de protection, et en particulier le film transparent, restent transparents aux longueurs d'ondes dans le domaine du visible mais également dans le domaine des ultraviolets (ultraviolets longs et/ou ultraviolets courts) et/ou des infrarouges, de façon à ce que les inscriptions protégées restent visibles (et lisibles) ainsi que, par exemple, des inscriptions sécuritaires d'authentification invisibles mais luminescents sous UVA et/ou sous UVC et/ou sous infrarouges.

Dans certains modes de réalisation, avantageusement et selon l'invention, ledit polymère thermoplastique compris dans la couche adhésive présente une température de transition vitreuse, mesurée par calorimétrie différentielle à balayage, comprise entre 50°C et 85°C et présente un indice d'hydroxyle compris entre 3 mg de KOH par gramme dudit polymère thermoplastique et 50 mg de KOH par gramme dudit polymère thermoplastique, et/ou un indice d'acide mesuré selon la norme DIN EN ISO 2114 compris entre 3mg de KOH par gramme dudit polymère thermoplastique et 50 mg de KOH par gramme dudit polymère thermoplastique.

Avantageusement et selon l'invention, l'indice d'hydroxyle dudit polymère thermoplastique est mesuré selon la norme DIN 53 240/2 de novembre 2007. Avantageusement et selon l'invention, l'indice d'hydroxyle représente la masse d'hydroxyde de potassium en milligramme nécessaire à la neutralisation de l'acide qui se combine par acylation à 1 gramme dudit polymère thermoplastique. La méthode de détermination de l'indice d'hydroxyle implique une acétylation des groupes hydroxyles libres dudit polymère thermoplastique avec de l'anhydride acétique (anhydride éthanoïque) dans un solvant tel que la pyridine. Après cette acétylation, de l'eau est ajoutée et l'anhydride acétique n'ayant pas réagi est converti en acide acétique et mesuré par titrage à l'aide d'hydroxyde de potassium.

Avantageusement et selon l'invention, l'indice d'acide dudit polymère thermoplastique est mesuré selon la norme DIN EN ISO 2114 de novembre 2000 (ou selon la norme DIN EN ISO 3682 de novembre 1996). Avantageusement et selon l'invention, l'indice d'acide représente la masse d'hydroxyde de potassium en milligramme nécessaire à la neutralisation des acides libres présents dans 1 gramme dudit polymère thermoplastique.

Les inventeurs ont constaté que l'utilisation, d'une part, d'au moins un polymère thermoplastique présentant un tel indice d'hydroxyle et/ou un tel indice d'acide et, d'autre part, d'au moins un agent réticulant présentant au moins 2,8 fonctions choisies dans le groupe formé des isocyanates, des carbodiimides, des azyridines et des alcoxysilanes permet de faire réagir ledit polymère thermoplastique et ledit agent réticulant de façon à obtenir un collage très fort, la force d'adhérence sur un document étant très élevée tout en permettant de former une couche adhésive transparente, au moins dans le domaine du visible et ainsi sans affecter la transparence du film transparent, ni du document sur lequel le film transparent est appliqué.

Dans certains modes de réalisation, avantageusement et selon l'invention, ledit polymère thermoplastique est choisi dans le groupe des polymères thermoplastiques présentant, en particulier avant ladite réticulation, une masse moléculaire moyenne en poids, mesurée par chromatographie d'exclusion stérique (SEC), comprise entre 3000 g/mol et 65000g/mol. En effet, les inventeurs ont constaté que ces polymères, étant notamment différents des polyols de faible masse moléculaire parfois utilisés, permettent d'obtenir un meilleur collage tout en présentant des propriétés mécaniques satisfaisantes pour la préparation d'un document et d'un dispositif de protection pour un tel document, notamment un document officiel.

Dans certains modes de réalisation, avantageusement et selon l'invention, ladite couche adhésive comprend au moins un matériau thermoplastique choisi dans le groupe formé des polyuréthanes (PU), des polyesters, des polyéthers, des polyacryliques, des polybutyral de vinyle, des polyacétal de vinyle, de la cellulose, de leurs copolymères et de leurs mélanges.

Chaque agent réticulant est choisi dans le groupe formé des composés aliphatiques comprenant entre 4 et 50 atomes de carbone et présente en moyenne au moins 2,8 fonctions (ou une fonctionnalité moyenne d'au moins 2,8) choisies dans le groupe formé des isocyanates, des carbodiimides, des azyridines et des alcoxysilanes par molécule d'agent réticulant. En particulier, cela signifie qu'on utilise une composition, dite composition réticulante, comprenant au moins un tel agent réticulant, chaque molécule d'agent réticulant de ladite composition réticulante comprenant en moyenne au moins 2,8 fonctions choisies dans le groupe formé des isocyanates, des carbodiimides, des azyridines et des alcoxysilanes (l'écart type étant faible).

Dans certains modes de réalisation, avantageusement et selon l'invention, ledit agent réticulant est choisi dans le groupe formé des polyisocyanates, des polycarbodiimides, des polyazyridines et des alcoxysilanes, ledit agent réticulant présentant en moyenne au moins 2,8 fonctions choisies dans le groupe formé des isocyanates, des carbodiimides, des azyridines et des alcoxysilanes par molécule d'agent réticulant. Dans certains modes de réalisation, avantageusement et selon l'invention, ledit agent réticulant est choisi dans le groupe formé des composés présentant en moyenne entre 2,8 et 6 fonctions par molécule d'agent réticulant, et en particulier entre 2,8 et 3,5 (valeurs comprises) fonctions choisies dans le groupe formé des isocyanates, des carbodiimides, des azyridines et des alcoxysilanes par molécule d'agent réticulant.

Dans tout le texte, on entend par fonctionnalité ou nombre moyen de fonctions par molécule d'agent réticulant, le nombre f = Mₙ x C (f étant égal à Mₙ multiplié par C), Mₙ représentant la masse molaire moyenne en nombre de l'agent réticulant (mesurée par chromatographie par perméation de gel) et C représentant la concentration en fonction isocyanate, carbodiimide, azyridine ou alcoxysilane en mole par gramme d'agent réticulant (susceptible d'être mesurée par potentiométrie indirecte ou par une autre méthode de titrimétrie adaptée).

Dans tout le texte, on entend par fonction isocyanate, tout groupement de formule -N=C=O, la fonction isocyanate étant liée à l'agent réticulant par l'atome d'azote (N). Dans tout le texte, on entend par fonction carbodiimide, tout groupement de formule -N=C=N-, la fonction carbodiimide étant liée à l'agent réticulant par au moins un des atomes d'azote (N).

Dans tout le texte, on entend par fonction azyridine, tout groupement de formule : 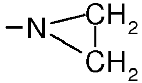 la fonction azyridine étant liée à l'agent réticulant par l'atome d'azote (N).

Dans tout le texte, on entend par fonction alcoxysilane, tout groupement de formule -Si-O-, la fonction alcoxysilane étant liée à l'agent réticulant par l'atome de silicium (Si) et/ou l'atome d'oxygène (O).

Dans certains modes de réalisation, avantageusement et selon l'invention, préalablement à ladite réaction de réticulation, ladite couche adhésive comprend 0,5% à 10% en poids d'agent réticulant par rapport au poids total dudit polymère thermoplastique, et en particulier 1% à 5% en poids d'agent réticulant par rapport au poids total dudit polymère thermoplastique. Un dispositif de protection selon l'invention, et en particulier ladite couche adhésive, comprend donc, avant d'être apposé(e) sur un document à protéger, 0,5% à 10% en poids d'agent réticulant par rapport au poids total dudit polymère thermoplastique. En effet, les inventeurs ont constaté qu'un faible pourcentage d'agent réticulant suffisait pour permettre d'obtenir un excellent collage du film transparent sur un document et qu'ajouter une proportion supérieure d'agent réticulant dans ladite couche adhésive serait au contraire préjudiciable à l'obtention d'un tel collage.

L'agent réticulant peut être ajouté sous une forme liquide ou solide directement par mélange avec le matériau thermoplastique de la couche adhésive.

Dans certains modes de réalisation, avantageusement et selon l'invention, la couche adhésive est préparée et appliquée de façon à former ladite couche adhésive à partir d'une composition, dite composition adhésive, comprenant :
- au moins 10% en poids, et en particulier 10% à 60% en poids (notamment lorsqu'un solvant est également utilisé pour préparer la composition adhésive), de polymère thermoplastique par rapport au poids total de ladite composition, ledit polymère thermoplastique étant choisi dans le groupe formé des polymères thermoplastiques présentant un indice d'hydroxyle mesuré selon la norme DIN 53 240/2 compris entre 3 mg de KOH/g et 60 mg de KOH/g, des polymères thermoplastiques présentant un indice d'acide mesuré selon la norme DIN EN ISO 2114 compris entre 2 mg de KOH/g et 150 mg de KOH/g, de leurs copolymères et de leurs mélanges, et dans le groupe formé des polymères thermoplastiques présentant une température de transition vitreuse, mesurée par calorimétrie différentielle à balayage, comprise entre 40°C et 110°C,
- au moins 0,5% en poids, et en particulier 0,5% à 10% en poids, d'agent réticulant par rapport au poids total de ladite composition, ledit agent réticulant étant choisi dans le groupe formé des composés aliphatiques comprenant entre 4 et 50 atomes de carbone, et dans le groupe formé des composés présentant en moyenne au moins 2,8 fonctions choisies dans le groupe formé des isocyanates, des carbodiimides, des azyridines et des alcoxysilanes par molécule d'agent réticulant.

En particulier, avantageusement et selon l'invention, une telle composition adhésive comprend également un ou plusieurs solvant(s) dudit polymère thermoplastique, c'est-à-dire tout liquide dans lequel ledit polymère thermoplastique ou ledit agent réticulant est miscible ou qui peut être utilisé pour diluer ledit polymère thermoplastique ou ledit agent réticulant. Tout solvant adapté pour pouvoir préparer une telle composition adhésive comprenant également ledit polymère thermoplastique et ledit agent réticulant peut être utilisé.

Dans d'autres variantes selon l'invention, l'agent réticulant et le matériau thermoplastique ne sont pas présents au sein d'une même couche. Une couche comprenant le matériau thermoplastique peut par exemple être appliquée sur le film transparent tandis qu'une couche comprenant l'agent réticulant et éventuellement un liant peut être appliquée directement sur le document à protéger, ou inversement.

Dans une variante de réalisation d'un procédé selon l'invention, la couche adhésive est déposée directement sur le document à protéger, puis le film transparent est appliqué au contact de la couche adhésive déposée sur le document (le film transparent pouvant lui-même également être revêtu d'une couche adhésive ou non).

L'invention s'étend à un document, notamment un document officiel, comprenant une feuille de base, des inscriptions variables associées à ladite feuille de base et au moins un dispositif de protection selon l'invention.

Un document officiel selon l'invention peut notamment être choisi dans le groupe formé des passeports, des feuilles de passeport, des fiches douanières, des visas, des cartes d'identité, des permis de conduire, des cartes d'immatriculation de véhicules (cartes grises), des cartes bancaires, des cartes de fidélité, des chèques bancaires, des diplômes, des certificats, des titres de transport, des cartes de contrôle d'accès, des badges, des étiquettes, des actes légaux, des contrats, des registres légaux, des plans cadastraux, des documents fiduciaires, des billets de banque, des emballages et des plans de fabrication.

Avantageusement et dans un document selon l'invention, au moins un film transparent s'étend au contact de ladite couche adhésive.

Avantageusement et selon l'invention, ledit dispositif de protection recouvre au moins une portion de surface dudit document officiel et s'étend selon un format adapté au format de ladite portion de surface.

Avantageusement et selon l'invention, ledit dispositif de protection s'étend selon un format similaire à celui du document.

L'invention concerne aussi un procédé de protection d'un document, un dispositif de protection et un document caractérisés en combinaison par tout ou partie des caractéristiques mentionnées ci-dessus ou ci-après.

D'autres buts, caractéristiques et avantages de l'invention apparaissent à la lecture de la description suivante d'un de ses modes de réalisation préférentielle donnée à titre d'exemple non limitatif, et qui se réfère aux figures annexées dans lesquelles :
- la figure 1 est une vue schématique d'une première étape d'un procédé selon l'invention dans laquelle un film transparent est représenté en coupe,
- la figure 2 est une vue schématique d'une deuxième étape d'un procédé selon l'invention dans laquelle un dispositif de protection selon l'invention est représenté en coupe,
- la figure 3 est une vue schématique d'une troisième étape d'un procédé selon l'invention dans laquelle un dispositif de protection et un document selon l'invention sont représentés en coupe,
- la figure 4 est une vue schématique d'une quatrième étape d'un procédé selon l'invention dans laquelle un dispositif de protection et un document selon l'invention sont représentés en coupe,
- la figure 5 est une vue schématique en coupe d'un dispositif de protection obtenu par un procédé selon l'invention et collé sur un document officiel,
- la figure 6 est une vue schématique d'un document officiel protégé par un dispositif de protection selon l'invention.

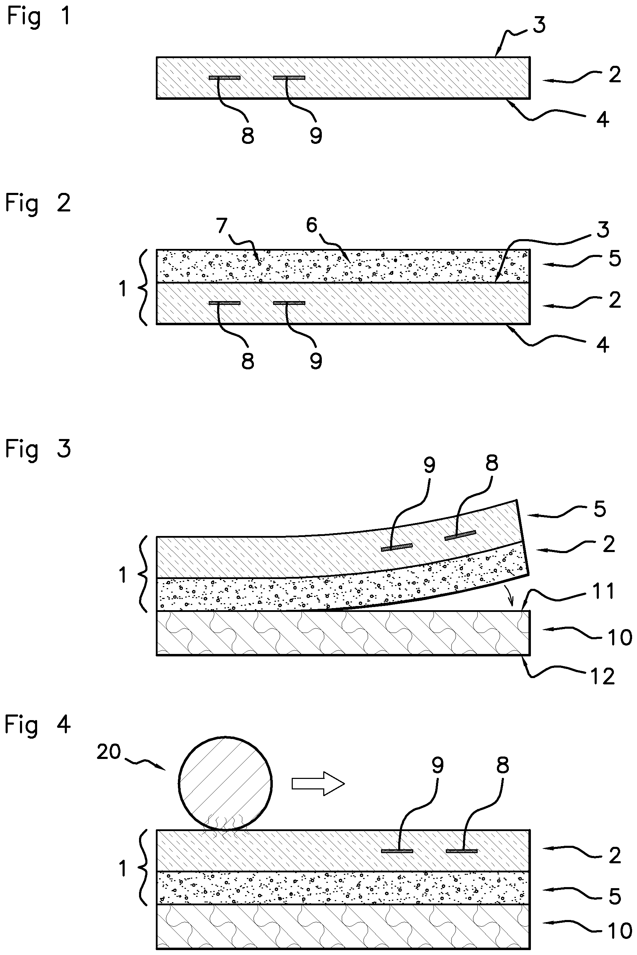

La figure 1 représente un film 2 fin translucide ou transparent en matériau polymère, faisant office de film support. Le film transparent 2 est généralement choisi de façon à présenter une taille sensiblement identique à celle de la surface à recouvrir du document à protéger. Dans une variante de réalisation, le film transparent 2 peut également être choisi de façon à présenter une taille qui dépasse celle de la surface à recouvrir du document à protéger.

Le film transparent 2 peut être formé d'au moins une couche en matériau choisi parmi les matériaux thermodurcissables, les matériaux thermoplastiques (notamment choisi parmi les polycarbonates, les PVC, les polyesters (polyéthylène téréphtalate PET, polyéthylène téréphtalate glycol PETG) et les films co-extrudés de polyester et de polycarbonate (PEC)...). D'autres exemples sont possibles.

Le film transparent 2 peut par exemple être formé d'un empilement d'une pluralité de couches superposées les unes sur les autres et ayant fait l'objet d'une lamination à chaud et sous pression. La majorité des couches est de préférence formée d'un matériau thermoplastique, notamment choisie parmi les polycarbonates, les PVC, les polyesters (polyéthylène téréphtalate PET, polyéthylène téréphtalate glycol PETG), et les films co-extrudés de polyester et de polycarbonate (PEC). Dans certains modes de réalisation avantageux, notamment pour les applications de type carte bancaire, carte d'identification ou carte de transport, le film 2 transparent est formé d'une pluralité de couches en polycarbonate. Rien n'empêche que le film 2 transparent incorpore des couches de matériaux différents, y compris des couches dans une matière autre qu'un matériau thermoplastique. Le nombre total de couches constituant un dispositif de protection 1 selon l'invention n'a pas d'importance dans le cadre de la présente invention. Le film 2 transparent peut également être un film de type Fasprotek™ (FASVER, Baillargues, France) ou encore un film de type Fasfilm™ (FASVER, Baillargues, France).

Le film transparent 2 se présente sous la forme générale d'une feuille ou d'une carte et présente donc deux faces principales planes externes opposées, et une épaisseur relativement faible. Dans toute la suite, seule une face principale, dite face 3 extrême, est décrite et présente les caractéristiques de l'invention, étant entendu que l'autre face principale extrême peut tout aussi bien présenter les mêmes caractéristiques, ou au contraire présenter d'autres caractéristiques. En conséquence, il est supposé dans toute la suite que la face opposée à la face 3 extrême considérée est une face principale extrême du film transparent 2 représenté en coupe figure 1, sans que cela implique une quelconque limitation, un tel film transparent 2 pouvant être constitué lui-même d'une couche ou d'une pluralité de couches plus ou moins épaisse(s) non décrite(s) dans la présente description.

Le film transparent 2 comprend des inscriptions 8, 9 de sécurité telles que des inscriptions préparées à l'aide de pigments photoluminescents (choisis parmi les pigments fluorescents et les pigments phosphorescents), des inscriptions métallisées réfléchissantes...

La figure 2 représente le film transparent 2 sur lequel on a déposé une couche adhésive 5 polymérique thermoplastique. La couche adhésive 5 comprend au moins un matériau thermoplastique et au moins un composé, dit agent réticulant 7, adapté pour permettre une réticulation de ladite couche adhésive. À titre de polymère thermoplastique, on peut par exemple utiliser, dans la couche adhésive :
- des résines copolyester de références Dynapol L® et LH® de la société Evonik Degussa Corporation® (New Jersey, USA),
- des résines acryliques de références Néocryl® de la société DSM® (Zwolle, Hollande),
- des résines cellulosiques telles que celles référencées CAB-551® de la société Eastman Chemical Company® (Kingsport, USA),
- ou encore des résines poly(butyral/acetal) vinylique de référence S-LEC B/K® de la société Sekisui Chemical Company® (Dusseldorf, Allemagne).

À titre d'agent réticulant, on peut par exemple utiliser, dans la couche adhésive :
- des durcisseurs de type polyisocyanate aliphatique tels que ceux référencés Desmodur® N 100®, N75®, N3200®, N3300®, N3390®, N3600®, N3790®, N3800®, XP2675®, E XP 2747®, XP2599®, E3265®, E3370®, Z4470®, XP2489®, XP2838®, XP2763® commercialisés par la société Covestro® (Lervekusen, Allemagne),
- des durcisseurs de type polyisocyanate aliphatique bloqués (c'est-à-dire dont les fonctions réactives deviennent réactives à partir d'une température prédéterminée, par exemple de l'ordre de 150°C) tels que ceux référencés Trixene® BI7950®, BI7951®, B17960®, B17961®, B17963®, B17982®, B1791®, BI7992® commercialisés par la société Braxenden Chemicals Ltd® (Lancashire, Royaume-Uni), ou référencés Desmodur® BL3175®, BL4265®, BL5375®, PL350®, PL340®, BL3370®, BL3475®, BL3272®, BL2078® commercialisés par la société Covestro® (Lervekusen, Allemagne),
- des durcisseurs de type polycarbodiimides tels que ceux référencés Picassian® XL-701® et XL-72®5 de la société Stahl® (Waalwijk, Pays-Bas),
- des durcisseurs de type polyaziridine tels que ceux référencés PZ-33® et PZ-28® commercialisés par la société PolyAziridine LLC® (New Jersey, USA),
- ou encore des alcoxysilanes tels que ceux référencés A-186®, A-187®, A-link 25®, A-link 35® commercialisés par la société Momentive® (New York, USA).

La couche adhésive 5 déposée sur le film transparent 2 comprend au moins un matériau thermoplastique choisi dans le groupe formé des polyuréthanes (PU), des polyesters, des polyacrylates, des polyéthers, des polybutyral de vinyle, des polyacétal de vinyle, de la cellulose, de leurs copolymères et de leurs mélanges.

L'agent réticulant 7 est choisi dans le groupe des polyisocyanates aliphatiques. La couche adhésive comprend entre 0,5% et 10%,-notamment entre 1 % et 5 %, en particulier entre 2 % et 4 %- en poids d'agent réticulant.

L'épaisseur de la couche adhésive 5 peut être comprise entre 5µm et 50µm.

Après avoir déposé la couche adhésive 5 en surface du film transparent 2, on obtient un dispositif de protection 1 selon l'invention. Un film de détachement (non représenté) peut éventuellement être déposé en surface de la couche adhésive 5 afin de protéger la surface externe de la couche adhésive avant son collage au contact d'un document.

La figure 3 représente le collage de ce dispositif de protection 1 sur un document tel qu'un document officiel 10 présentant une face supérieure 11 et une face inférieure 12. Le dispositif de protection 1 est collé sur la face supérieure 11 du document officiel 10.

Un tel document officiel 10 peut par exemple être choisi dans le groupe formé des passeports, des feuilles de passeport, des fiches douanières, des visas, des cartes d'identité, des permis de conduire, des cartes d'immatriculation de véhicules (cartes grises), des cartes bancaires, des cartes de fidélité, des chèques bancaires, des diplômes, des certificats, des titres de transport, des cartes de contrôle d'accès, des badges, des étiquettes, des actes légaux, des contrats, des registres légaux, des plans cadastraux, des documents fiduciaires, des billets de banque, des emballages et des plans de fabrication.

Le document 10 officiel présente différents marquages sécuritaires 8, 9, 13, 14, 15 représentant des informations (mentions communes) et/ou constituant des marquages de sécurité destinés à renforcer la résistance aux tentatives de falsification et/ou à empêcher la reproduction par lecture optique.

Après avoir disposé le dispositif de protection en surface d'un document, on active la réticulation de la couche adhésive. Ceci peut être réalisé immédiatement après avoir apposé le dispositif de protection sur le document ou ultérieurement si un stockage est nécessaire avant une personnalisation finale du document.

On réalise la réticulation de la couche adhésive 5 en soumettant ladite couche adhésive à une température supérieure à une température prédéterminée de réticulation de la couche adhésive 5. On peut également réaliser la réticulation de la couche adhésive 5 en réalisant au moins une étape de lamination à chaud et sous pression du document 10 revêtu du dispositif de protection 1 préalablement préparé.

La figure 4 illustre l'étape de lamination à chaud et sous pression du document officiel 10 comprenant le dispositif de protection 1 à l'aide d'un rouleau 20 de lamination. Le rouleau 20 de lamination se déplace au contact de la surface extrême 4 du film transparent 2 du dispositif de protection 1 dans un sens de déplacement défini par la flèche présente sur la figure 4 de façon à activer et à permettre la réticulation de la couche adhésive 5. Sur la figure 4, on voit donc une coupe transversale du rouleau 20 de lamination, le rouleau se déplaçant selon une direction orthogonale à la direction longitudinale du rouleau 20. La lamination à chaud et sous pression peut être effectuée dans les conditions de température et de pression telles que la température est comprise entre 60°C et 220°C, et en particulier entre 80°C et 200°C, et à une pression comprise entre 3.10⁵ Pa et 6.10⁵ Pa, le rouleau se déplaçant à une vitesse de 5 mm/s à 30 mm/s. Dans le cadre d'une fabrication en continu, un seul passage du rouleau de lamination sur la surface du document officiel peut suffire. Toutefois, il est bien sûr possible de prévoir plusieurs passages successifs du rouleau de lamination, notamment en fonction des autres paramètres (température et pression de lamination, natures et proportions respectives du matériau thermoplastique et de l'agent réticulant, épaisseur du film protecteur...).

Alternativement, la lamination à chaud et sous pression peut être effectuée dans une presse de lamination à des températures comprises entre 150°C et 200°C sous une pression comprise entre 10.10⁵ Pa et 20.10⁵ Pa.

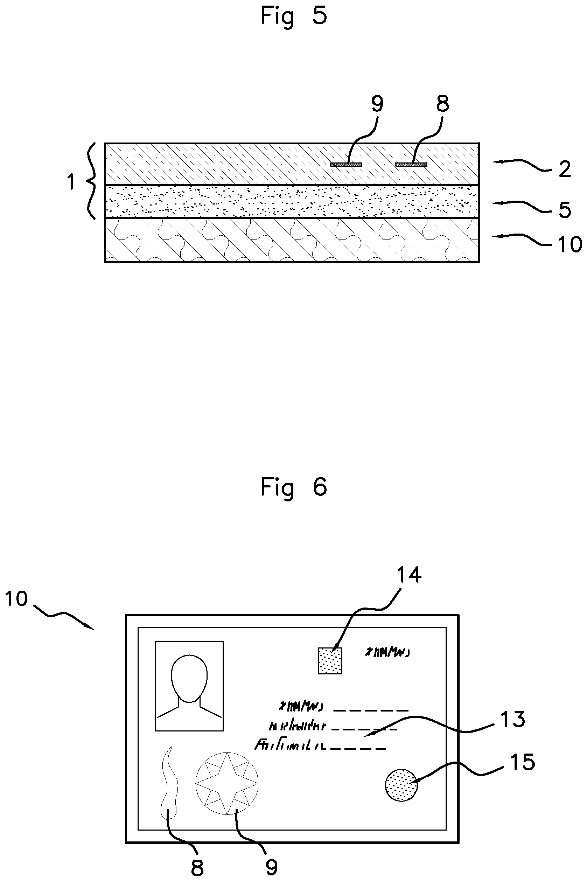

La figure 6 représente un document officiel 10 (par exemple une carte d'identité) sur lequel on a transféré le dispositif de protection tel que préparé précédemment. Le document officiel 10 présente différents marquages sécuritaires 8, 9, 13, 14, 15 telles que des inscriptions préparées à l'aide de pigments photoluminescents (choisis parmi les pigments fluorescents et les pigments phosphorescents), des inscriptions préparées à l'aide de pigments iridescents, des inscriptions métallisées réfléchissantes ou encore des marquages réalisés par gravure au laser.

Les inventeurs ont constaté qu'un document protégé selon l'invention présente une excellente résistance à la manipulation et résiste au décollement par flexions successives (conformément aux normes applicables aux documents officiels tels que les passeports ou les cartes d'identité notamment). Les inventeurs ont également constaté qu'un document protégé selon l'invention présente une excellente résistance à la température, notamment une excellente résistance climatique (notamment lors de tests de résistance climatique effectués entre 35°C et 70°C). En outre un dispositif de protection et un document protégé selon l'invention ne jaunit pas au cours du temps.

### EXEMPLE 1

On choisit un film support transparent en polyester (PET) présentant une épaisseur de 100 µm commercialisé par la société Dupont Teijin Films TM (Tokyo, Japon) sous la référence Melinex®, ayant subi un traitement thermique et de surface de type Politherm/Polibond® effectué par la société Technifilm® (Valence, France), pouvant contenir des impressions sécuritaires d'authentification sur lequel on imprime une couche d'adhésif au format du document officiel à protéger.

La couche adhésive est formée par impression sur le film précédent d'une composition liquide adhésive à l'aide d'un écran sérigraphique réalisé à partir d'un tissu dont la maille comprend 77 fils/cm et présentant un diamètre de 55µm.

La composition adhésive est composée de :
- 30% en poids d'une résine thermoplastique polyester de référence Dynapol L210® commercialisée par la société Evonik Degussa® Corporation (New Jersey, USA), de concentration comprise entre 25 à 30% en poids. Cette résine thermoplastique présente une température de transition vitreuse de 63°C, un indice d'hydroxyle mesuré selon la norme DIN 53 240/2 de 5 mg KOH/g et une masse moléculaire moyenne en poids, mesurée par chromatographie d'exclusion stérique (SEC), de 20000g/mol,
- 1% en poids d'un agent réticulant de référence Desmodur® N75 de la société Covestro (Leverkusen, Allemagne), chaque molécule d'agent réticulant contenant 3 fonctions isocyanates réactives et 21 atomes de carbone,
- 69% en poids d'un solvant, le 3-ethoxypropionate d'éthyle.

Le film support transparent sur lequel a été déposée une couche de cette composition adhésive forme un dispositif de protection qui est collé sur un document officiel à protéger par lamination.

Le document officiel comprend une feuille de papier synthétique commercialisée sous la référence Teslin® (gamme SP1000®) par la société PPG industries® (Ohio, USA). La feuille de Teslin® peut contenir un fond de sécurité imprimé.

Le procédé de lamination est un procédé à rouleau dont la température consigne est de 150°C, la lamination du document officiel étant réalisée à une vitesse de 17mm/s sous environ 5.10⁵Pa.

À la suite du collage par lamination une activation thermique de 5 min à 150°C du document officiel obtenu permet de finaliser la réticulation des fonctions réactives de la résine thermoplastique avec celles de l'agent réticulant.

Exemple de test de résistance au décollement du dispositif de protection :
Le document officiel obtenu est immergé pendant plus de 72 heures dans un bain d'éthanol. Le film transparent du dispositif de protection ne se décolle pas du document officiel.

Le document officiel obtenu est chauffé progressivement sur une plaque chaude, la température est augmentée progressivement jusqu'à une température de 180°C. À chaque nouvelle augmentation de 2°C, on tente de retirer le film transparent du dispositif de protection.

À aucun moment le film transparent du dispositif de protection ne se décolle du document officiel.

L'invention peut faire l'objet de très nombreuses variantes de réalisation. En particulier, il est possible de préparer un dispositif de protection comprenant deux couches adhésives différentes, une couche adhésive étant disposée sur chaque face du film transparent. Ou encore, il est possible de disposer un film transparent selon l'invention sur chacune des deux faces d'un document officiel de façon à protéger chacune des faces dudit document contre la falsification.

## Revendications

1. Procédé de protection d'un document (10) dans lequel :
- on colle un film (2) transparent sur une face dudit document en vue de protéger des inscriptions variables dudit document (10), par l'intermédiaire d'au moins une couche adhésive (5) comprenant au moins un polymère thermoplastique,
**caractérisé en ce que** :
- on choisit ledit polymère thermoplastique dans le groupe formé des polymères thermoplastiques présentant un indice d'hydroxyle mesuré selon la norme DIN 53 240/2 compris entre 3mg de KOH/g et 60mg de KOH/g, des polymères thermoplastiques présentant un indice d'acide mesuré selon la norme DIN EN ISO 2114 compris entre 2mg de KOH/g et 150mg de KOH/g, de leurs copolymères et de leurs mélanges,
- ledit polymère thermoplastique présente une température de transition vitreuse, mesurée par calorimétrie différentielle à balayage, comprise entre 40°C et 110°C,
- ladite couche adhésive comprend en outre au moins un agent réticulant, chaque agent réticulant :
• étant choisi dans le groupe des composés aliphatiques comprenant entre 4 et 50 atomes de carbone,
• présentant en moyenne au moins 2,8 fonctions, choisies dans le groupe formé des isocyanates, des carbodiimides, des azyridines et des alcoxysilanes, par molécule d'agent réticulant,
- lors du collage dudit film (2) transparent sur ledit document, on réalise une réticulation dudit polymère thermoplastique et dudit agent réticulant de la couche adhésive.

2. Procédé selon la revendication 1, **caractérisé en ce que**, préalablement à ladite réaction de réticulation, ladite couche adhésive (5) comprend 0,5% à 10% en poids d'agent réticulant par rapport au poids total dudit polymère thermoplastique.

3. Procédé selon l'une des revendications 1 ou 2, **caractérisé en ce qu'**on réalise ladite réticulation de ladite couche adhésive (5) à une température comprise entre 60°C et 220°C.

4. Procédé selon l'une des revendications 1 à 3, **caractérisé en ce qu'**on réalise au moins une étape de lamination à chaud et sous pression dudit document (10) revêtu dudit film (2) transparent.

5. Procédé selon l'une des revendications 1 à 4, **caractérisé en ce que** ledit polymère thermoplastique est choisi dans le groupe des polymères thermoplastiques présentant, avant ladite réticulation, une masse moléculaire moyenne en poids, mesurée par chromatographie d'exclusion stérique, comprise entre 3000g/mol et 65000g/mol.

6. Dispositif de protection (1) pour un document (10) présentant des inscriptions variables à protéger, ledit dispositif de protection comprenant :
- au moins un film (2) transparent portant au moins une couche adhésive (5) comprenant au moins un polymère thermoplastique, **caractérisé en ce que** :
- ledit polymère thermoplastique est choisi dans le groupe formé des polymères thermoplastiques présentant un indice d'hydroxyle mesuré selon la norme DIN 53 240/2 compris entre 3 mg de KOH/g et 60 mg de KOH/g, des polymères thermoplastiques présentant un indice d'acide mesuré selon la norme DIN EN ISO 2114 compris entre 2 mg de KOH/g et 150 mg de KOH/g, de leurs copolymères et de leurs mélanges,
- ledit polymère thermoplastique présente une température de transition vitreuse, mesurée par calorimétrie différentielle à balayage, comprise entre 40°C et 110°C,
et **en ce que** :
- ladite couche adhésive comprend en outre au moins un agent réticulant, chaque agent réticulant :
• étant choisi dans le groupe des composés aliphatiques comprenant entre 4 et 50 atomes de carbone,
• présentant en moyenne au moins 2,8 fonctions, choisies dans le groupe formé des isocyanates, des carbodiimides, des azyridines et des alcoxysilanes, par molécule d'agent réticulant.

7. Dispositif (1) selon la revendication 6, **caractérisé en ce que** ladite couche adhésive (5) comprend entre 0,5% et 10% en poids d'agent réticulant par rapport au poids total dudit polymère thermoplastique.

8. Dispositif (1) selon l'une des revendications 6 ou 7, **caractérisé en ce que** ledit film transparent (2) comprend une pluralité de couches superposées.

9. Dispositif (1) selon l'une des revendications 6 à 8, **caractérisé en ce que** ledit film transparent (2) comprend au moins une couche, notamment au moins une couche extrême thermoplastique.

10. Dispositif (1) selon l'une des revendications 6 à 9, **caractérisé en ce que** ledit polymère thermoplastique est choisi dans le groupe formé des polymères thermoplastiques présentant une masse moléculaire moyenne en poids, mesurée par chromatographie d'exclusion stérique comprise entre 3000g/mol et 65000g/mol.

11. Dispositif (1) selon l'une des revendications 6 à 10, **caractérisé en ce que** ladite couche adhésive (5) comprend au moins un matériau thermoplastique choisi dans le groupe formé des polyuréthanes, des polyesters, des polyacryliques, des polyéthers, des polybutyral de vinyle, des polyacétal de vinyle, de la cellulose, de leurs copolymères et de leurs mélanges.

12. Document (10) comprenant:
- une feuille de base,
- des inscriptions variables (13) associées à ladite feuille de base,
- au moins une couche adhésive (5) comprenant au moins un polymère thermoplastique, ladite couche adhésive s'étendant au contact d'une couche extrême de ladite feuille de base,
**caractérisé en ce que** :
- ledit polymère thermoplastique est choisi dans le groupe formé des polymères thermoplastiques présentant un indice d'hydroxyle mesuré selon la norme DIN 53 240/2 compris entre 3 mg de KOH/g et 60 mg de KOH/g, des polymères thermoplastiques présentant un indice d'acide mesuré selon la norme DIN EN ISO 2114 compris entre 2 mg de KOH/g et 150 mg de KOH/g, de leurs copolymères et de leurs mélanges,
- ledit polymère thermoplastique présente une température de transition vitreuse, mesurée par calorimétrie différentielle à balayage, comprise entre 40°C et 110°C,
et **en ce que** :
- ladite couche adhésive comprend en outre au moins un agent réticulant, chaque agent réticulant :
• étant choisi dans le groupe des composés aliphatiques comprenant entre 4 et 50 atomes de carbone,
• présentant en moyenne au moins 2,8 fonctions, choisies dans le groupe formé des isocyanates, des carbodiimides, des azyridines et des alcoxysilanes, par molécule d'agent réticulant.

13. Document (10) selon la revendication 12, **caractérisé en ce qu'**au moins un film (2) transparent s'étend au contact de ladite couche adhésive (5).

## Patentansprüche

1. Verfahren zum Schutz eines Dokuments (10), wobei
- mit mindestens einer Klebeschicht (5), die mindestens ein thermoplastisches Polymer umfasst, eine durchsichtige Folie (2) auf eine Seite des Dokuments geklebt wird, damit unterschiedliche Angaben des Dokuments (10) geschützt werden,
**dadurch gekennzeichnet, dass**:
- das thermoplastische Polymer aus der Gruppe ausgewählt wird, die gebildet ist von thermoplastischen Polymeren, die eine nach der Norm DIN 53 240/2 gemessene Hydroxylzahl zwischen 3 mg KOH/g und 60 mg KOH/g aufweisen, thermoplastischen Polymeren, die eine nach der Norm DIN EN ISO 2114 gemessene Säurezahl zwischen 2 mg KOH/g und 150 mg KOH/g aufweisen, ihren Copolymeren und ihren Mischungen,
- das thermoplastische Polymer eine mittels dynamischer Differenzkalorimetrie gemessene Glasübergangstemperatur zwischen 40°C und 110°C aufweist,
- die Klebeschicht ferner mindestens ein Vernetzungsmittel umfasst, wobei jedes Vernetzungsmittel:
▪ aus der Gruppe der aliphatischen Verbindungen mit zwischen 4 und 50 Kohlenstoffatomen ausgewählt wird,
▪ im Schnitt mindestens 2,8 funktionelle Gruppen pro Molekül Vernetzungsmittel aufweist, die aus der Gruppe ausgewählt sind, die von Isocyanaten, Carbodiimiden, Azyridinen und Alcoxysilanen gebildet wird,
- beim Aufkleben der durchsichtigen Folie (2) auf das Dokument eine Vernetzung des thermoplastischen Polymers und des Vernetzungsmittels der Klebeschicht vorgenommen wird.

2. Verfahren nach Anspruch 1, **dadurch gekennzeichnet, dass** die Klebeschicht (5) vor der Vernetzungsreaktion 0,5 Gew.-% bis 10 Gew.-% Vernetzungsmittel bezogen auf das Gesamtgewicht des thermoplastischen Polymers umfasst.

3. Verfahren nach Anspruch 1 oder 2, **dadurch gekennzeichnet, dass** die Vernetzung der Klebeschicht (5) bei einer Temperatur zwischen 60°C und 220°C vorgenommen wird.

4. Verfahren nach einem der Ansprüche 1 bis 3, **dadurch gekennzeichnet, dass** mindestens ein Schritt zur Heißlaminierung unter Druck des mit der durchsichtigen Folie (2) beschichteten Dokuments (10) vorgenommen wird.

5. Verfahren nach einem der Ansprüche 1 bis 4, **dadurch gekennzeichnet, dass** das thermoplastische Polymer aus der Gruppe der thermoplastischen Polymere ausgewählt wird, die vor der Vernetzung eine mittels Größenausschlusschromatographie gemessene gewichtsgemittelte molare Masse zwischen 3000 g/mol und 65000 g/mol aufweisen.

6. Schutzvorrichtung (1) für ein Dokument (10), das zu schützende unterschiedliche Angaben aufweist, wobei die Schutzvorrichtung umfasst:
- mindestens eine durchsichtige Folie (2), die mindestens eine Klebeschicht (5) trägt, die mindestens ein thermoplastisches Polymer umfasst,
**dadurch gekennzeichnet, dass**:
- das thermoplastische Polymer aus der Gruppe ausgewählt ist, die gebildet ist von thermoplastischen Polymeren, die eine nach der Norm DIN 53 240/2 gemessene Hydroxylzahl zwischen 3 mg KOH/g und 60 mg KOH/g aufweisen, thermoplastischen Polymeren, die eine nach der Norm DIN EN ISO 2114 gemessene Säurezahl zwischen 2 mg KOH/g und 150 mg KOH/g aufweisen, ihren Copolymeren und ihren Mischungen,
- das thermoplastische Polymer eine mittels dynamischer Differenzkalorimetrie gemessene Glasübergangstemperatur zwischen 40°C und 110°C aufweist,
und dadurch, dass:
- die Klebeschicht ferner mindestens ein Vernetzungsmittel umfasst, wobei jedes Vernetzungsmittel:
▪ aus der Gruppe der aliphatischen Verbindungen mit zwischen 4 und 50 Kohlenstoffatomen ausgewählt ist,
▪ im Schnitt mindestens 2,8 funktionelle Gruppen pro Molekül Vernetzungsmittel aufweist, die aus der Gruppe ausgewählt sind, die von Isocyanaten, Carbodiimiden, Azyridinen und Alcoxysilanen gebildet wird.

7. Vorrichtung (1) nach Anspruch 6, **dadurch gekennzeichnet, dass** die Klebeschicht (5) zwischen 0,5 Gew.-% und 10 Gew.-% Vernetzungsmittel bezogen auf das Gesamtgewicht des thermoplastischen Polymers umfasst.

8. Vorrichtung (1) nach Anspruch 6 oder 7, **dadurch gekennzeichnet, dass** die durchsichtige Folie (2) eine Vielzahl von übereinanderliegenden Schichten umfasst.

9. Vorrichtung (1) nach einem der Ansprüche 6 bis 8, **dadurch gekennzeichnet, dass** die durchsichtige Folie (2) mindestens eine Schicht, insbesondere mindestens eine thermoplastische Außenschicht umfasst.

10. Vorrichtung (1) nach einem der Ansprüche 6 bis 9, **dadurch gekennzeichnet, dass** das thermoplastische Polymer aus der Gruppe ausgewählt ist, die von thermoplastischen Polymeren gebildet ist, die eine mittels Größenausschlusschromatographie gemessene gewichtsgemittelte molare Masse zwischen 3000 g/mol und 65000 g/mol aufweisen.

11. Vorrichtung (1) nach einem der Ansprüche 6 bis 10, **dadurch gekennzeichnet, dass** die Klebeschicht (5) mindestens ein thermoplastisches Material umfasst, das aus der Gruppe ausgewählt ist, die von Polyurethanen, Polyestern, Polyacrylaten, Polyethern, Polyvinylbutyralen, Polyvinylacetalen, Cellulose, ihren Copolymeren und ihren Mischungen gebildet wird.

12. Dokument (10), umfassend:
- ein Basisblatt,
- unterschiedliche Angaben (13), die dem Basisblatt zugehörig sind,
- mindestens eine Klebeschicht (5), die mindestens ein thermoplastisches Polymer umfasst, wobei die Klebeschicht im Kontakt mit einer Außenschicht des Basisblatts verläuft,
**dadurch gekennzeichnet, dass**:
- das thermoplastische Polymer aus der Gruppe ausgewählt ist, die gebildet ist von thermoplastischen Polymeren, die eine nach der Norm DIN 53 240/2 gemessene Hydroxylzahl zwischen 3 mg KOH/g und 60 mg KOH/g aufweisen, thermoplastischen Polymeren, die eine nach der Norm DIN EN ISO 2114 gemessene Säurezahl zwischen 2 mg KOH/g und 150 mg KOH/g aufweisen, ihren Copolymeren und ihren Mischungen,
- das thermoplastische Polymer eine mittels dynamischer Differenzkalorimetrie gemessene Glasübergangstemperatur zwischen 40°C und 110°C aufweist,
und dadurch, dass:
- die Klebeschicht ferner mindestens ein Vernetzungsmittel umfasst, wobei jedes Vernetzungsmittel:
▪ aus der Gruppe der aliphatischen Verbindungen mit zwischen 4 und 50 Kohlenstoffatomen ausgewählt ist,
▪ im Schnitt mindestens 2,8 funktionelle Gruppen pro Molekül Vernetzungsmittel aufweist, die aus der Gruppe ausgewählt sind, die von Isocyanaten, Carbodiimiden, Azyridinen und Alcoxysilanen gebildet wird.

13. Dokument (10) nach Anspruch 12, **dadurch gekennzeichnet, dass** mindestens eine durchsichtige Folie (2) im Kontakt mit der Klebeschicht (5) verläuft.

## Claims

1. Process for protecting a document (10), wherein:
- a transparent film (2) is bonded to a face of said document with a view to protecting variable inscriptions of said document (10), by means of at least one adhesive layer (5) comprising at least one thermoplastic polymer,
**characterized in that**:
- said thermoplastic polymer is chosen from the group made up of thermoplastic polymers having a hydroxyl number, measured according to the standard DIN 53 240/2, of between 3 mg of KOH/g and 60 mg of KOH/g, thermoplastic polymers having an acid number, measured according to the standard DIN EN ISO 2114, of between 2 mg of KOH/g and 150 mg of KOH/g, copolymers thereof and blends thereof,
- said thermoplastic polymer has a glass transition temperature, measured by differential scanning calorimetry, of between 40°C and 110°C,
- said adhesive layer also comprises at least one crosslinking agent, each crosslinking agent:
• being chosen from the group of aliphatic compounds comprising between 4 and 50 carbon atoms,
• having on average at least 2.8 functions, chosen from the group made up of isocyanates, carbodiimides, aziridines and alkoxysilanes, per molecule of crosslinking agent,
- during the bonding of said transparent film (2) to said document, crosslinking of said thermoplastic polymer and of said crosslinking agent of the adhesive layer is carried out.

2. Process according to Claim 1, **characterized in that**, prior to said crosslinking reaction, said adhesive layer (5) comprises 0.5% to 10% by weight of crosslinking agent relative to the total weight of said thermoplastic polymer.

3. Process according to either of Claims 1 and 2, **characterized in that** said crosslinking of said adhesive layer (5) is carried out at a temperature of between 60°C and 220°C.

4. Process according to one of Claims 1 to 3, **characterized in that** at least one step of hot lamination, under pressure, of said document (10) coated with said transparent film (2) is carried out.

5. Process according to one of Claims 1 to 4, **characterized in that** said thermoplastic polymer is chosen from the group of thermoplastic polymers having, before said crosslinking, a weight-average molecular weight, measured by size exclusion chromatography, of between 3000 g/mol and 65 000 g/mol.

6. Protective device (1) for a document (10) having variable inscriptions to be protected, said protective device comprising:
- at least one transparent film (2) bearing at least one adhesive layer (5) comprising at least one thermoplastic polymer,
**characterized in that**:
- said thermoplastic polymer is chosen from the group made up of thermoplastic polymers having a hydroxyl number, measured according to the standard DIN 53 240/2, of between 3 mg of KOH/g and 60 mg of KOH/g, thermoplastic polymers having an acid number, measured according to the standard DIN EN ISO 2114, of between 2 mg of KOH/g and 150 mg of KOH/g, copolymers thereof and blends thereof,
- said thermoplastic polymer has a glass transition temperature, measured by differential scanning calorimetry, of between 40°C and 110°C,
and **in that**:
- said adhesive layer also comprises at least one crosslinking agent, each crosslinking agent:
• being chosen from the group of aliphatic compounds comprising between 4 and 50 carbon atoms,
• having on average at least 2.8 functions, chosen from the group made up of isocyanates, carbodiimides, aziridines and alkoxysilanes, per molecule of crosslinking agent.

7. Device (1) according to Claim 6, **characterized in that** said adhesive layer (5) comprises between 0.5% and 10% by weight of crosslinking agent relative to the total weight of said thermoplastic polymer.

8. Device (1) according to either of Claims 6 and 7, **characterized in that** said transparent film (2) comprises a plurality of superimposed layers.

9. Device (1) according to one of Claims 6 to 8, **characterized in that** said transparent film (2) comprises at least one layer, in particular at least one thermoplastic extreme layer.

10. Device (1) according to one of Claims 6 to 9, **characterized in that** said thermoplastic polymer is chosen from the group made up of thermoplastic polymers having a weight-average molecular weight, measured by size exclusion chromatography, of between 3000 g/mol and 65 000 g/mol.

11. Device (1) according to one of Claims 6 to 10, **characterized in that** said adhesive layer (5) comprises at least one thermoplastic material chosen from the group made up of polyurethanes, polyesters, polyacrylics, polyethers, polyvinyl butyrals, polyvinyl acetals, cellulose, copolymers thereof and blends thereof.

12. Document (10) comprising:
- a base sheet,
- variable inscriptions (13) associated with said base sheet,
- at least one adhesive layer (5) comprising at least one thermoplastic polymer, said adhesive layer extending in contact with an extreme layer of said base sheet,
**characterized in that**:
- said thermoplastic polymer is chosen from the group made up of thermoplastic polymers having a hydroxyl number, measured according to standard DIN 53 240/2, of between 3 mg of KOH/g and 60 mg of KOH/g, thermoplastic polymers having an acid number, measured according to the standard DIN EN ISO 2114, of between 2 mg of KOH/g and 150 mg of KOH/g, copolymers thereof and blends thereof,
- said thermoplastic polymer has a glass transition temperature, measured by differential scanning calorimetry, of between 40°C and 110°C, and
**in that**:
- said adhesive layer also comprises at least one crosslinking agent, each crosslinking agent:
• being chosen from the group of aliphatic compounds comprising between 4 and 50 carbon atoms,
• having on average at least 2.8 functions, chosen from the group made up of isocyanates, carbodiimides, aziridines and alkoxysilanes, per molecule of crosslinking agent.

13. Document (10) according to Claim 12, **characterized in that** at least one transparent film (2) extends in contact with said adhesive layer (5).
